# EUROPÄISCHE PATENTSCHRIFT

(11) **EP 1 121 238 B1**
(45) Veröffentlichungstag und Bekanntmachung des Hinweises auf die Patenterteilung: **15.05.2002**
(21) Anmeldenummer: 99952495.2
(22) Anmeldetag: 05.10.1999
(51) Int. Cl.: B29C 47/40, B29C 47/64

(54) **GLEICHDRALLDOPPELSCHNECKENEXTRUDER**
COROTATING TWIN SCREW EXTRUDER
EXTRUDEUSE A DEUX VIS A ROTATION IDENTIQUE

(30) Priorität: 05.10.1998 DE 19845633
(43) Veröffentlichungstag der Anmeldung: 08.08.2001
(73) Patentinhaber: Coperion Werner & Pfleiderer GmbH & Co. KG, 70469 Stuttgart (DE)
(72) Erfinder: BURKHARDT, Ulrich, D-70372 Stuttgart (DE)
(74) Vertreter: Rau, Manfred, Dr. Dipl.-Ing.
(86) Internationale Anmeldenummer: EP9907372
(87) Internationale Veröffentlichungsnummer: WO0020188

(56) Entgegenhaltungen:
- EP-A- 0 037 984
- EP-A- 0 072 184
- EP-A- 0 269 913
- EP-A- 0 875 356
- DE-A- 2 802 125
- JP-A- 8 025 456
- US-A- 2 670 188
- US-A- 3 536 680
- DIPL.-ING. R. ERDMENGER: "Mehrwellen-Schnecken in der Verfahrenstechnik" CHEMIE. INGENIEUR. TECHNIK., Bd. 36, Nr. 3, März 1964 (1964-03), Seiten 175-184, XP002128846 VERLAG CHEMIE GMBH. WEINHEIM., DE ISSN: 0009-286X

## Beschreibung

Die Erfindung richtet sich auf einen Gleichdralldoppelschneckenextruder,
- mit einem Gehäuse,
- mit zwei zueinander parallelen, einander teilweise unter Bildung von zwei Zwickeln durchdringenden Gehäuse-Bohrungen,
- mit zwei in den Gehäuse-Bohrungen angeordneten gleichsinnig drehantreibbaren Wellen,
- mit auf den Wellen angeordneten Schneckenelementen,
- mit mindestens einem Knetscheibenpaar, das aus je einer auf jeder Welle drehfest angebrachten, eingängigen, mit einem Kamm mit einem Kammwinkel aufweisenden Knetscheibe gebildet ist, die miteinander kämmen und bei einer Umdrehung in Drehrichtung ein im Querschnitt zumindest weitgehend geschlossenes Zwickeldreiecksvolumen im Bereich jedes Zwickels begrenzen.

Gleichdralldoppelschneckenextruder werden insbesondere zur Kunstoffaufbereitung für die folgenden typischen Verfahrensaufgaben eingesetzt:
- Plastifizieren, Mischen, Homogenisieren und Granulieren,
- Dispergieren von Pigmenten und Additiven,
- Homogenisieren von Produkten mit unterschiedlicher Viskosität,
- Legieren verschiedener Kunststoffe,
- Einmischen von Verstärkungs- und Füllstoffen wie Glasfasern, Kohlefasern, Talkum, Kreide usw.,
- Modifizieren von Kunststoffen durch Einmischen von Flammschutzmitteln, Weichmachern, Vernetzern, Porenbildnern usw.,
- Zerstören von Gelen, Fischaugen usw.,

Die Mehrzahl dieser typischen Verfahrensaufgaben lassen sich in die grundsätzlichen Verfahrensschritte
- distributives Mischen
- dispergives Mischen
- Zerteilen von Partikeln
einteilen.

Beim distributiven Mischen wird der Hauptmassestrom in mehrere Teilströme aufgeteilt und diese werden wieder in unterschiedlicher Anordnung zusammengeführt. Dabei werden bevorzugt schmalscheibige Knetblöcke oder spezielle Mischelemente eingesetzt. Mit solchen Elementen oder deren Kombinationen werden insbesondere die Verfahrensaufgaben Homogenisieren, Einmischen von Verstärkungs- und Füllstoffen und Modifizieren von Kunststoffen gelöst.

Beim dispergiven Mischen erfolgt ein Platzwechsel von benachbarten Partikeln durch eine intensive Scher- und/oder Dehnströmung. Zum Einsatz kommen hier bisher hauptsächlich breitscheibige Knetblöcke oder Schnekkengewinde mit großen Steigungen (Steigungswinkel >60 °), wobei in beiden Fällen die typische Keilströmung der Querströmung mit einem hohen Scherfeld genutzt wird.

Das Zerteilen von Partikeln in der Kunstoffschmelze erfolgt stets durch eine intensive Scher- und/oder Dehnströmung. Dabei versteht man unter dem Begriff "Partikel" nicht nur Feststoffpartikel, wie sie beispiels weise bei Pigmenten oder feinen Füllstoffen vorkommen, sondern auch Flüssigkeits- oder auch Schmelzetröpfchen beim Herstellen von Polymerblends und Polymerlegierungen. Bei Gelen und Fischaugen handelt es sich meist um höhermolekulare Partikel, die in der niederviskosen Polymermatrix eingebettet sind und beim Aufbereitungsprozeß unzureichend zerteilt und dispergiert wurden. Eine Dehnströmung tritt beispielsweise in einer Querschnittsverengung auf, in der also eine Beschleunigung erfolgt.

Bei überlagerter Scher- und Dehnströmung tritt die Zerteilung von Partikeln schon bei weit kleineren Schergeschwindigkeiten ein als bei der reinen Scherströmung. Daraus folgt, daß für den Zerteilvorgang bei überlagerter Scher- und Dehnströmung weniger Energie umgesetzt werden muß als bei der reinen Scherströmung, da die Schergeschwindigkeit übepproportional (bei newtonschen Stoffen quadratisch) in die spezifische Energieeinleitung eingeht. Für die Praxis der Kunststoffaufbereitung bedeutet dies, daß die Schmelzetemperatur niedrig gehalten und damit thermischer Abbau der Polymerketten vermieden werden kann.

Bei einem hohen Viskositätsunterschied zwischen Partikeln und Schmelzematrix muß zur Deformation und Zerteilung der Partikel ein-genügend hohes Scher- und Dehnströmungsfeld existieren. Weiterhin muß gewährleistet sein, daß möglichst alle Partikel dieses Strömungsfeld durchlaufen.

Aus der DE-C-813 154 sind bei Gleichdralldoppelschneckenextrudern der gattungsgemäßen Art einsetzbare eingängige Knetscheibenanordnungen bekannt. Diese eingängigen, einen Kamm und Flanken aufweisenden Knetscheiben schließen jeweils eine Zwickelfläche ein. Wenn diese Zwickelfläche der zugehörigen Knetscheibe offen ist, dann erfolgt eine Übergabe des Produktes von einer Knetscheibe zur anderen Knetscheibe, während bei geschlossener Zwickelfläche im Zwickelbereich das Produkt aus diesem vollständig ausgedrückt wird. Dabei kann das Produkt in Achsrichtung, und zwar in stromauf- und stromabwärtiger Richtung ausweichen. Während bei der Übergabe des Produktes von der Flanke einer Knetscheibe auf die Flanke einer anderen Knetscheibe nureine relativ schwache Scher- und Dehnströmung stattfindet, ist der Ausdrückvorgang ein Knetvorgang. Bei den in der DE-C-813 154 beschriebenen Knetscheibenanordnungen sind zwei Knetscheibenpaare derart gegeneinander versetzt angeordnet, daß das benachbarte Knetscheibenpaar nach einer Seite abgesperrt wird. Hier ist also eine Seite des Zwickeldreieckvolumens, die stromauf- oder stromabwärtige Richtung offen. Dadurch kann das im Zwickeldreieckvolumen befindliche Produkt durch die nicht abgespercte, stets offene Querschnittsfläche des Zwickeldreieckvolumens in axialer Richtung ausgeknetet werden. Unter "Kneten" wird im allgemeinen ein Auspreßvorgang zwischen zwei Flächen verstanden, die sich aufeinander zu bewegen, wobei das Volumen zwischen den Flächen nicht allseitig abgeschlossen ist. Zu Beginn des Ausdrückvorganges. also in der Stellung der Knetscheiben zueinander, in der diese einen Zwickelbereich maximaler Größe begrenzen, ist der Querschnitt der offenen Seite ebenfalls maximal und verringert sich erst mit der weiteren Drehbewegung der Knetscheiben. Dabei wird jedoch schonein hoher Anteil des im Zwickel volumen befindlichen Produktes durch den stets offenen großen Querschnitt ausgedrückt. Hohe Deformationsspannungen durch hohe Dehnströmungen können hierbei nicht zustande kommen, da die notwendigen Beschleunigungen zur Ausbildung einer hohen Dehnströmung nicht erreicht werden können. Es kann durch eine solche Anordnung von eingängigen Knetscheiben zwar ein höherer Anteil des Gesamtproduktstromes erfaßt werden; das Produkt wird jedoch nicht den notwendigen Deformationsspannungen ausgesetzt.

Der Erfindung liegt die Aufgabe zugrunde, einen Gldichdralldoppelschnekkenextruder der gattungsgemäßen Art derart auszubilden, daß das im Zwikkeldreieckvolumen befindliche Produkt den notwendigen Deformationsspannungen ausgesetzt wird.

Diese Aufgabe wird erfindungsgemäß dadurch gelöst, daß beiderseits der ein Knetscheibenpaar bildenden Knetscheiben in stromaufwärtiger und stromabwärtiger Richtung je ein Absperrelement drehfest auf den Wellen derart angeordnet ist, daß unter Bildung einer Quetscher-Einheit das Zwikkeldreiecksvolumen in Richtung der Achsen in stromaufwärtiger und stromabwärtiger Richtung zumindest in erheblichem Maße geschlogsen ist.

Durch die erfindungsgemäßen Maßnahmen wird erreicht, daß das Produkt aus dem Zwickeldreieckvolumen durch kleine definierte Spalte "ausgequetscht" wird, wobei es hohen Beschleunigungen ausgesetzt wird, die wiederum zu hohen Deformationsgeschwindigkeiten führen. Bei einem "Quetschvorgang" ist das Volumen zwischen den Knetscheiben und dem zugeordneten Bereich der Gehäusewandung im Zwickelbereich allseitig abgeschlossen. Das Produkt kann in der Regel nur durch die Spalte entweichen, die aufgrund maschinentechnisch notwendigen Spiels existieren. Diese Spalte bestehen beispielsweise zwischen dem Kamm der Knetscheibe und dem Gehäuse, zwischen den beiden Knetscheiben eines Knetscheibenpaares und axial zwischen den Knetscheiben und den Absperrelementen, damit diese aneinander vorbeilaufen können. Diese Spalte können durch Wahl des Spiels-gezielt dimensioniert werden. Ein Knetscheibenpaar und die zugehörigen Absperrelemente bilden eine Quetschereinheit.

"Quetschen" unterscheidet sich vom Kneten insbesondere dadurch, daß das in einem allseitig begrenzten, abgeschlossenen Volumen befindliche Produkt vollständig durch die erwähnten engen Spalte strömen muß und daß durch die Beschleunigung beim Eintritt in den jeweiligen Spalt eine besonders hohe Dehnströmung erzielt wird. Die Größe dieser Dehnströmung kann wiederum gezielt durch die Dimensionierung der Spalte beeinflußt werden.

Aufgrund der erfindungsgemäßen Maßnahmen ist das Zwickeldreieckvolumen sowohl in stromaufwärtiger als auch in stromabwärtiger Richtung zumindest weitgehend abgegrenzt und abgesperrt. Wenn der Versatzwinkel zwischen den Absperrelementen und den Knetscheiben kleiner oder gleich dem Kammwinkel der Knetscheiben ist, dann ist das Zwickeldreieckvolumen vollständig abgeschlossen. Das Produkt strömt hierbei durch die Spalte, die aufgrund der maschinentechnisch notwendigen, gegebenenfalls veränderten Spiele, wie Radialspiel. Kamm-Flanken-Spiel oder axiales Stirnflächenspiel vorhanden sind. Wenn der Versatzwinkel größer als der Kammwinkel ist, ergibt sich je eine stromaufwärtige und eine stromabwärtige Versatzlücke. Hierbei strömt ein Teil des Produktes durch die Versatzlücken. Durch die Beschleunigung beim Eintritt in die Lücken und Spalte findet eine besonders hohe kombinierte Scher- und Dehnströmung statt.

Die Anordnung, bei der ein eingängiges Knetscheibenpaar, die Quetscherscheiben, durch jeweils ein stromauf- und stromabwärtiges eingängiges Absperrelementepaar begrenzt wird, wird als Quetscher-Einheit bezeichnet.

Die erfindungsgemäßen Maßnahmen sind grundsätzlich bei mehrgängigen Knetscheibenpaaren anwendbar; das effektive Zwickeldreiecksvolumen nimmt aber mit zunehmender Gangzahl stark ab, so daß die-geschilderten vorteilhaften Maßnahmen und Ergebnisse aufgrund des Ausquetschens stark abnehmen. Aus diesem Grunde sind die erfindungsgemäßen Maßnahmen ganz besonders bevorzugt bei eingängigen Knetscheiben anwendbar.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung von Ausführüngsbeispielen.

In der Zeichnung zeigen
- Fig. 1: einen Gleichdralldoppelschneckenextruder in Draufsicht mit geöffnetem Gehäuse, wie er aus dem Stand der Technik bekannt ist,
- Fig. 2: ein im Gehäuse des Extruders angeordnetes Knetscheibenpaar in Draufsicht, entsprechend der Schnittlinie II-II in Fig.1,
- Fig. 3a - p: das Knetscheibenpaar nach Fig. 2 in sechzehn jeweils um gleiche Winkelbeträge versetzten Eingriffspositionen,
- Fig. 4a - c: Quetscher-Einheiten nach der Erfindung mit unterschiedlichen Versatzwinkeln der Absperrelemente zu den Knetscheiben,
- Fig. 5 chen: die Quetscher-Einheiten nach Fig. 4a in vier unterschiedli-Eingriffspositionen in einer Stirnansicht,
- Fig. 6a - p: die Quetscher-Einheiten nach Fig. 4a und 5 in einer Draufsicht in sechzehn verschiedenen Eingriffspositionen,
- Fig. 7: eine Anordnung von vier jeweils gegeneinander versetzten Quetscher-Einheiten in Draufsicht,
- Fig. 8 scher-: eine Anordnung von vier gegeneinander versetzten Quet-Einheiten mit abgewandelten Absperrelementen,
- Fig. 9: eine Draufsicht auf eine Teil-Quetscher-Einheit bestehend aus einem Knetscheibenpaar und zugeordneten stromaufwärtigen Absperrelementen, mit einer Darstellung der radialen Spiele,
- Fig. 10: eine Draufsicht auf eine Quetscher-Einheit in einer Darstellung wie in Fig. 7, jedoch mit einer Darstellung der axialen Spiele und
- Fig. 11: eine Darstellung gemäß Fig. 9 mit in den Absperrelementen ausgebildeten Ausquetschkanälen.

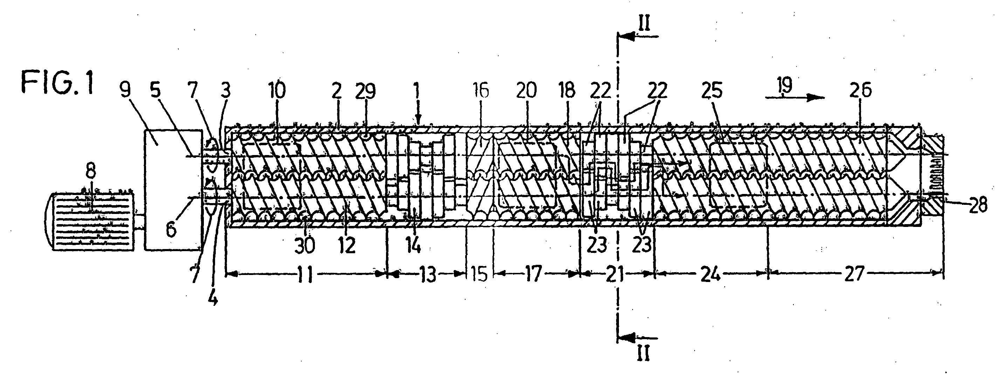

Fig. 1 zeigt einen in seinem Grundaufbau zum Stand der Technik gehörenden Gleichdralldoppelschneckenextruder 1 miteinem Gehäuse 2.Er weist zwei Wellen 3, 4 auf, deren Achsen 5, 6 parallel zueinander verlaufen. Der Antrieb der Wellen 3, 4 in-gleichsinniger Drehrichtung 7 erfolgt mittels eines Motors 8 über ein Verzweigungsgetriebe 9. Benachbart zum Getriebe 9 ist im Gehäuse 2 ein nur angedeuteter Aufgabe-Trichter 10 für ein im Extruder 1 aufzuschmelzendes Polymer vorgesehen. Unter diesem Trichter 10 und im Anschluß daran ist eine Einzugszone 11 ausgebildet, in der auf den Wellen 3, 4 Förder-Schneckenelemente 12 angeordnet sind. Im Anschluß daran sind in einer Aufschmelzzone 13 auf den Wellen 3, 4 Knetblöcke 14 drehfest angebracht. Daran schließt sich eine Rückstauzone 15 an, in der auf den Wellen 3, 4 Rückförder-Schneckenelemente 16 angebracht sind, die eine entgegengesetzte Schneckenwindungsrichtung wie die Förder-Schneckenelemente 12 aufweisen. An die Rückstauzone 15 schließt sich eine Zugabezone 17 an, in der wiederum auf den Wellen 3, 4 Förder-Schnecke-elemente 18 angebracht sind, die in Förderrichtung 19 des Extruders 1 fördern. Unmittelbar hinter den Rückförder-Schneckenelementen 16 mündet ein Zugabe-Trichter 20 in die Zugabezone 17, der ebenfalls nur angedeutet ist. Durch ihn werden Additive, wie z. B. Füllstoffe oder Glasfasern, in die Schmelze eingegeben.

Der Zugabezone 17 schließt sich eine Mischzone 21 an, in der auf den Wellen 3, 4 Knetblöcke 22,23 angebracht sind. Die letzteren bestehen wie die Knetblöcke 14 aus Knetscheiben, die im folgenden noch näher erläutert werden. An diese Mischzone 21 schließt sich eine Entgasungszone 24 an, in der im Gehäuse 2 eine ebenfalls nur angedeutete Entgasungsöffnung 25 ausgebildet ist. In dieser Entgasungszone 24 sind auf den Wellen 3, 4 Förder-Schneckenelemente 26 angebracht, die das Polymer, in das Füll- und Verstärkungsstoffe eingemischt sind, in Förderrichtung 19 zu einer Austragszone 27 mit einer sogenannten Lochleiste als Austragsorgan 28 fördern. Die Wellen 3, 4 sind in einander teilweise durchdringenden Gehäuse-Bohrungen 29, 30 angeordnet.

Die Knetblöcke 14, 22, 23 werden dort angeordnet, wo im Verfahrensablauf im Extruder 1 eine intensive Scher- und Dehnströmung erzeugt werden soll. Es sind dies beispielsweise Zonen, wo in einer Kunststoffschmelze Partikel, wie Pigmente oder feine Füllstoffe, Flüssigkeits- oder auch Schmelztröpfchen beim Herstellen von Polymerlegierungen, Gele und Fischaugen etc. zerteilt werden sollen.

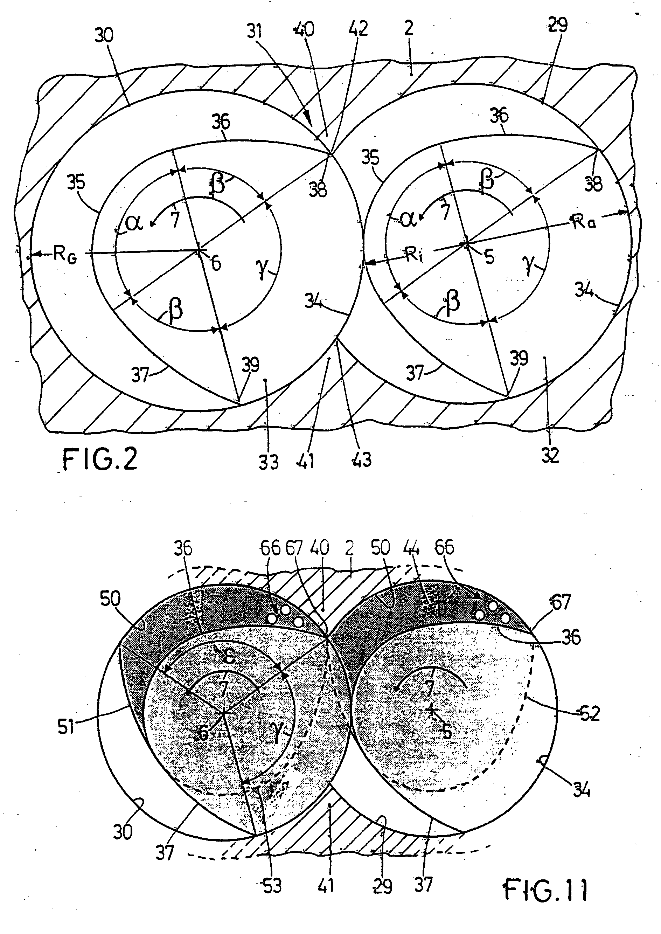

Fig. 2 zeigt ein aus der DE-C-813 154 bekanntes Knetscheibenpaar 31, dessen Erläuterung Voraussetzung für das Verständnis der Erfindung ist. Die Knetscheiben 32, 33 können in den Knetblöcken 14 bzw. 22 bzw. 23 angeordnet sein, das heißt, sie sind drehfest mit den Wellen 3, 4 verbunden. Die identisch ausgebildeten eingängigen Knetscheiben 32, 33 weisen jeweils einen kreisabschnittsförmigen Kamm 34, einen ebenfalls kreisabschnittsförmigen Grund 35 und zwei Flanken 36, 37 auf, die den Grund 35 mit dem Kamm 34 verbinden. Der Kamm 34 hat einen Außen-Radius Rₐ von der jeweiligen Achse 5 bzw. 6. Der Grund 35 hat einen Innen-Radius Rᵢ von der Achse 5 bzw. 6. Der Grund 35 erstreckt sich über einen Grundwinkel α, die Flanken 36, 37 erstrecken sich über einen Flankenwinkel β, der Kamm 34 erstreckt sich über einen Kammwinkel γ. Die jeweilige Gehäuse-Bohrung 29 bzw. 30 hat einen Radius R_{G}. Der Kammwinkel γ und der Grundwinkel α sind gleich groß. Die Größe der Flankenwinkel β und damit die Größe des-Grundwinkels α und des Kammwinkels γ ergeben sich aus allgemein bekannten geometrischen Beziehungen, damit beim Gleichdrallantrieb der Wellen 3, 4 die Knetscheiben 32, 33-eines Knetscheibenpaares 31 einander dichtend abstreifen.

Am Übergang zwischen dem Kamm 34 und der Flanke 36 bzw. der Flanke 37 ist jeweils eine Kammspitze 38 bzw. 39 gebildet. Im Gehäuse 2 sind im Durchdringungsbereich der-Gehäusebohrungen 29, 30 Zwickel 40, 41 mit Zwickelspitzen 42, 43 gebildet.

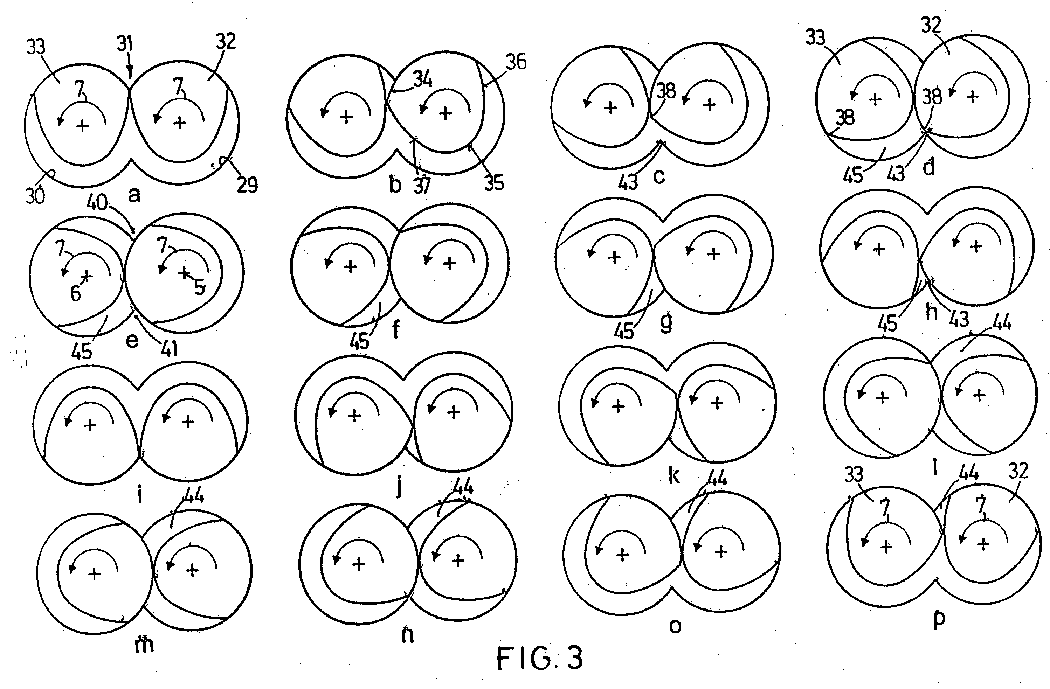

Die Funktion des Knetscheibenpaares 31 wird anhand der Fig. 3a bis 3p für eine Umdrehung erläutert. Zu Beginn eines Ausknetvorganges, also in der Stellung der maximalen Querschnittsfläche eines oberen Zwickeldreiecksvolumens 44, wie es in Fig. 2 und Fig. 31 dargestellt ist, ist der Querschnitt der axial offenen Seite ebenfalls maximal und verringert sich erst mit der weiteren Drehbewegung der Knetscheiben 32, 33 in Drehrichtung 7. Dabei wird jedoch aufgrund der Querschnittsverringerung des oberen Zwikkeldreiecksvolumens 44 ein großer Anteil des in ihm befindlichen Produktes durch einen stets offenen großen Querschnitt in Richtung der Achse 5 bzw. 6 ausgeknetet. Hohe Deformationsspannungen durch hohe Dehnströmungen können dadurch nicht zustande kommen, da die für die Ausbildung einer hohen Dehnströmung erforderlichen hohen Beschleunigungen nicht erreicht werden. Die Verkleinerung der Querschnittsfläche des Zwikkeldreieckvolumens 44 und damit des Zwickeldreieckvolumens 44 erfolgt entsprechend den Darstellungen in Fig. 31, m, n, o, p, bis in der Stellung der Fig. 3a das obere Zwickeldreiecksvolumen 44 völlig geschlossen ist. Bei der weiteren Drehung der Knetscheiben 32, 33 entsprechend den Fig. 3b und c wird im Bereich des unteren Zwickels 41 lediglich das Produkt aus einer Gehäuse-Bohrung 30 in die andere Gehäuse-Bohrung 29 übergeben. Dieser Vorgang ist erst abgeschlossen, wenn entsprechend der Darstellung in Fig. 3d die voreilende Kammspitze 38 der Knetscheibe 32 die untere Zwickelspitze 43 erreicht und damit das untere Zwickeldreiecksvolumen 45, das der Knetscheibe 33 zugeordnet ist, verschließt. Beim Fortgang der Drehbewegung entsprechend den Fig. 3e bis 3i wird dieses Zwickeldseiecksvolumen vollständig ausgeknetet.

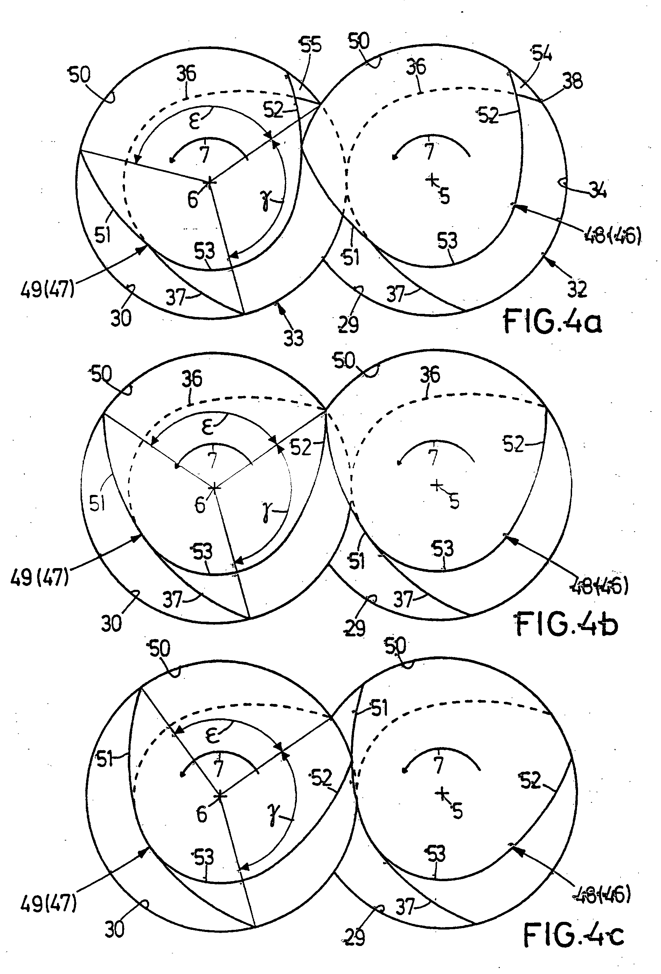

In den Fig. 4 bis 6 ist jeweils gezeigt, daß - entsprechend der Erfindung-den bekannten Knetscheiben 32, 33 jeweils stromaufwärts und stromabwärts ein Absperrelement 46 bis 49 zugeordnet ist, wobei die beiden stromaufwärtigen Absperrelemente 46, 47 und die beiden stromabwärtigen Absperrelemente einander paarweise zugeordnet sind. Sie sind in diesem Ausführungsbeispiel ebenfalls wie die Knetscheiben 32, 33 als ebene Scheiben ausgebildet, deren geometrische Abmessungen im Querschnitt denen der Knetscheiben 32, 33 zumindest im wesentlichen gleich sind. Die jeweils einer Knetscheibe 32 bzw. 33 zugeordneten Absperrelemente 46,48 bzw. 47, 49 sind um einen Versatzwinkel ε gegenüber den Knetscheiben 32, 33 versetzt, und zwar in Drehrichtung 7 voreilend. Da bei dieser Ausgestaltung ein Quetschen des Produktes erfolgt, wird nachfolgend jeweils eine solche Kombination aus zwei Knetscheiben 32, 33 und vier Absperrelementen 46 bis 49 als Quetscher-Einheit bezeichnet.

Die Absperrelemente 46 bis 49 weisen jeweils einen Kamm 50, zwei Flanken 51, 52 und einen Grund 53 auf. Die Kammwinkel der Absperrelemente sind gleich dem Kammwinkel γ. Wenn der Versatzwinkel ε größer als der Kammwinkel γ ist, dann ergibt sich die in Fig. 4a dargestellte Kombination. Wenn - wie dort dargestellt ist - das obere Zwickeldreiecksvolumen 44 von der voreilenden Kammspitze 38 der Knetscheibe 32 verschlossen ist, dann ist dieses Zwickeldreiecksvolumen 44 in stromaufwärtiger und stromabwärtiger Richtung nicht vollständig durch die Absperrelemente 47,49 verschlossen; es bleibt vielmehr eine sogenannte Versatzlücke 54, durch die unter anderem Produkt aus dem Zwickeldreiecksvolumen 44 ausgequetscht werden kann. Die Volumenverkleinerung des Zwickeldreiecksvolumens 44 entspricht der Darstellung in Fig. 31 und setzt sich dann fort entsprechend der Darstellung in Fig. 3m bis 3a. Im Bereich des unteren Zwickels 41 wiederholt sich dieser Vorgang entsprechend der Darstellung in den Fig. 3d bis 3i, wobei in diesem Fall das Produkt im wesentlichen durch die Versatzlücke 55 zwischen der Knetscheibe 32 und dem Absperrelement 48 abströmt. Diese Versatzlücken 54,55 sind - bezogen auf die Drehrichtung 7 - relativ zum jeweiligen geschlossenen Zwickeldreiecksvolumen 44. bzw. 45 nachlaufend, bleiben also während des Ausquetschens des Produktes aus dem geschlossenen Zwickeldreiecksvolumen 44,45 jeweils geöffnet.

Wenn entsprechend der Darstellung in Fig. 4b der Versatzwinkel ε gleich dem Kammwinkel γ der Knetscheibe 32 bzw. 33 ist, dann bildet sich keine Versatzlücke. Wenn dagegen entsprechend der Darstellung in Fig. 4c der Versatzwinkel ε kleiner als der Kammwinkel γ ist, dann ist zwischen der jeweiligen Knetscheibe 32 bzw. 33 und den zughörigen Absperrelementen 46, 48 bzw. 47, 49 jeweils eine in Drehrichtung voreilende Versatzlücke 55, die aber nach dem Verschließen des Zwickeldreieckvolumens 44 entsprechend der Darstellung in Fig. 4c beim Weiterdrehen sehr schnell geschlossen wird, so daß nur zu Beginn des Ausquetschens des Zwickeldreiecksvolumens 44 ein Ausquetschen durch diese Versatzlücke 55 erfolgt. Beim Ausquetschen des in Fig. 4c nicht dargestellten geschlossenen unteren Zwickeldreieckvolumens erfolgt ein entsprechender Ausquetschvorgang. Die Knetscheiben 32, 33 haben eine axiale Breite b.

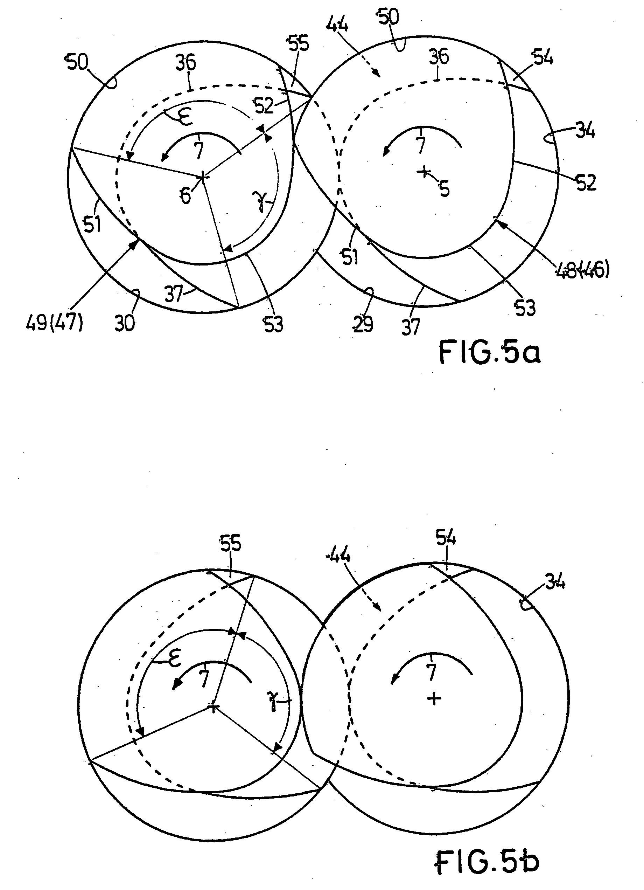

Die Fig. 5a bis 5d zeigen das Ausquetschen des oberen Zwickeldreiecksvolumens 44 der Ausgestaltung nach Fig. 4a, für die also gilt ε > γ. Hierbei ist erkennbar, daß die Versatzlücke 54 bei der Drehbewegung vom Verschließen des Zwickeldreieckvolumens 44 durch den Kamm 34 der Knetscheibe 33 (Fig. 5a) über die verschiedenen Drehwinkektellungen bis zur Ankunft der nacheilenden Kammspitze 39 der Knetscheibe 33 an der Zwickelspitze 42 stets in Richtung der Achse 5 bzw. 6 offen bleibt.

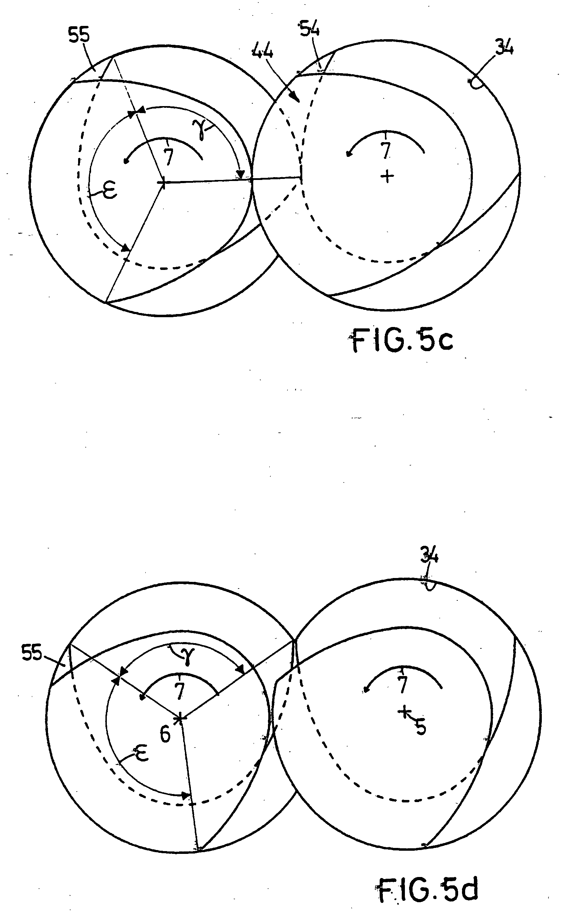

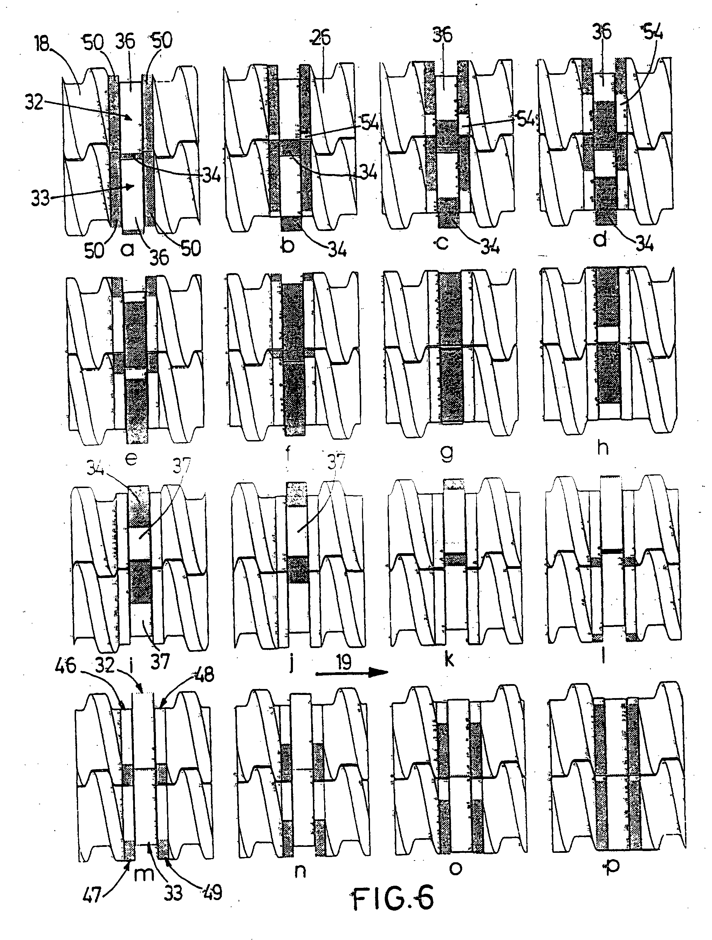

Wie oben bereits erwähnt, ist in Fig. 6 eine Quetscher-Einheit in Draufsicht, also in einer Ansicht von oben dargestellt, und zwar für die Ausgestaltung entsprechend Fig. 4a mit einem Versatzwinkel von ε > γ. Die Darstellung in Fig. 6a entspricht einer Draufsicht auf Fig. 4a. Das Zwickeldreiecksvolumen 44 wird gemäß den Darstellungen in Fig. 6a bis of vollständig ausgequetscht. Gemäß den Darssellungen in den Fig. 6e bis 61 öffnet sich der Zwickelbereich vollständig und wird durch die stromaufwärts befindlichen Schneckenelemente 18 erneut mit Produkt beschickt. In den Darstellungen gemäß Fig. 6m bis 6p wird das Zwickeldreiecksvolumen erneut gebildet, wobei es dann in der Darstellung gemäß Fig. 6a wieder geschlossen wird.

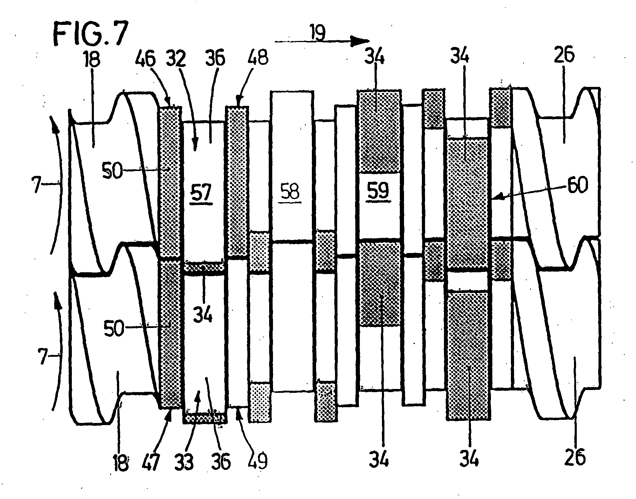

Fig. 7 zeigt vier direkt in Förderrichtung 19 hintereinander angeordnete Quetscher-Einheiten 57, 58, 59, 60, die jeweils so aufgebaut sind, wie es zuvor beschrieben ist, und zwar für einen Versatzwinkel ε > γ. Die vier Quetscher-Einheiten 57 bis 60 sind jeweils um 90° gegeneinander versetzt angeordnet, und zwar - in Förderrichtung 19 gesehen -gegenüber der nächsten stromaufwärts gelegenen Quetscher-Einheit entgegen der Drehrichtung 7. Die Stellung der stromaufwärts gelegenen Quetscher-Einheit 57 entspricht der in Fig. 6a dargestellten. Die Position der nachfolgenden Quetscher-Einheit 58 entspricht der in Fig. 6m dargestellten. Die Position der Quetscher-Einheit 59 entspricht der in Fig. 6i dargestellten. Die stromabwärts gelegene Quetscher-Einheit 60 ist entsprechend Fig. 6e angeordnet.

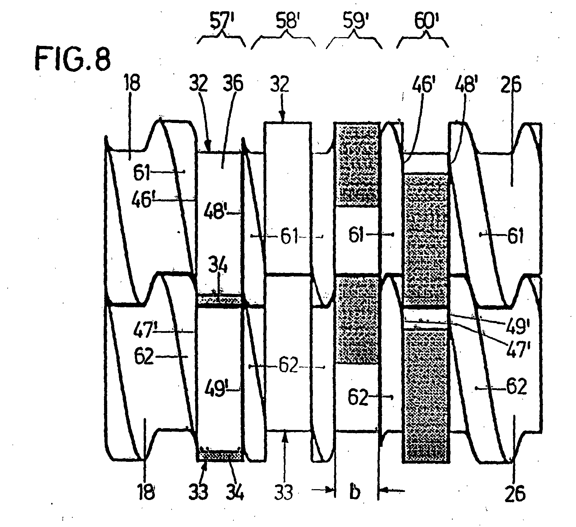

Während bei den bisher beschriebenen Ausgestaltungen die Absperrelemente 46, 47, 48, 49 ebenfalls durch Knetscheiben gebildet sind, können die Absperrelemente auch durch eingängige Schneckenelemente gebildet werden, wobei ein einziges eingängiges Schneckenelement gleichzeitig als stromabwärtiges Absperrelement einer Quetscher-Einheit und als stromaufwärtiges Absperrelement der nächstfolgenden Quetscher-Einheit dienen kann. Die Absperrung erfolgt hierbei jeweils über die Querschnittsfläche des Schneckenelementes, die der stromaufwärtigen Knetscheibe bzw. der stromabwärtigen Knetscheibe zugewandt ist. Diese-Querschnittsflächen üben die Absperrfunktion aus. In Fig. 8 ist eine Anordnung von vier aufeinander folgenden, um 90° im bereits geschilderten Sinne gegeneinander versetzten Quetscher-Einheiten 57', 58', 59', 60' dargestellt, wobei die als das jeweilige Absperrelement dienende Querschnittsfläche der Schnekkenelemente 61, 62 als Absperrelemente 46', 47', 48', 49' bezeichnet werden. Im übrigen werden die gleichen Bezugsziffern verwendet, wie bei der bisherigen Beschreibung.

Die Scher- und Dehnströmung des Ausquetschvorganges wird insbesondere durch das im Zwickeldreieckvolumen 44 bzw. 45 befindliche auszuquetschende Produktvolumen, die Drehzahl der Wellen 3, 4 sowie die Geometrie der Lücken, durch die das Produkt hindurchgequetscht wird, bestimmt. Das auszuquetschende, im Zwickeldreieckvolumen 44 bzw. 45 befindliche Produktvolumen wird festgelegt durch den Kammwinkel γ, der vom Radius-Verhältnis Ra/Ri, vom Versatzwinkel ε sowie von der Breite b der Knetscheiben 32 bzw. 33 abhängt. Insbesondere der Versatzwinkel ε und die Breite b der Knetscheiben 32, 33 sind von der Grundgeometrie des Gleichdralldoppelschneckenextruders unabhängig und damit frei wählbar, so daß das auszuquetschende Produktvolumen den Anforderungen des Aufbereitungsprozesses optimal angepaßt werden kann. Die Lücken bzw. Spalte, durch die das Produkt hindurchgequetscht wird, werden nach unten begrenzt durch die maschinentechnisch notwendigen minimalen Spiele zwischen den Knetscheiben 32, 33 und dem Gehäuse 2. Weitere notwendige Spiele bestehen zwischen den Knetscheiben 32, 33 im Bereich ihres jeweiligen Eingriffes. Weiterhin sind axiale Spiele zwischen den Knetscheiben 32,33 und den jeweils benachbarten Absperrelementen 46 bis 49 und 46' bis 49', damit diese aneinander vorbeilaufen können. Diese maschinentechnisch notwendigen minimalen Spiele können vergrößert werden, sind also von ihren vorgegebenen Minimalwerten ausgehend praktisch frei wählbar.

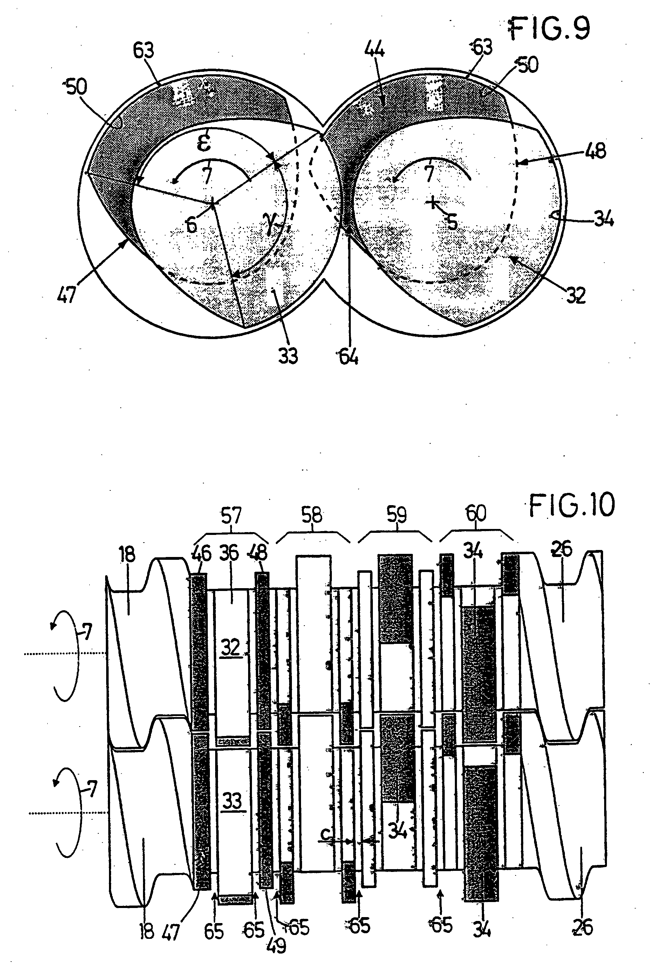

Die Fig. 9 und 10 zeigen die Lücken und Spalte, in denen der Quetschvorgang erfolgt. Zwischen dem jeweiligen Kamm 50 eines Absperrelementes 47,48 und dem Gehäuse 2 ist ein radialer Spalt 63, für dessen radiale Spaltweite s gilt: s = R_{G} - Rₐ. Für die maschinentechnischen Radialspiele gilt 0,0005 R_{G} ≤ s ≤ 0,0025 R_{G} (im Grenzfall 0,005 R_{G}). Im Eingriffsbereich der Knetscheiben ist ein Spalt 64.

Verfahrenstechnisch sinnvolle Spaltweiten sind größer. Für sie gilt bezogen auf die Gangtiefe Rₐ - Rᵢ
s ≤ 1/4 · (Rₐ - Rᵢ) und bevorzugt
s ≤ 1/8 · (Rₐ - Rᵢ) und bevorzugt
s ≤ 1/16 · (Rₐ - Rᵢ) und bevorzugt
s ≤ 1/32 · (Rₐ - Rᵢ) und bevorzugt
s ≤ 1/64 · (Rₐ - Rᵢ) und bevorzugt
s≤ 1/100 · (Rₐ - Rᵢ).

Die Größe der Versatzlücke 54,55 richtet sich nach der Größe des Versatzwinkels ε, wobei gilt
ε ≤ γ + 60° und bevorzugt
ε ≤ γ+30° und bevorzugt
ε ≤ γ+ 10° und bevorzugt
ε≤γ+5°.

Wenn keine Versatzlücke vorhanden ist, gilt für den Versatzwinkel ε
ε≤γ- 90° und bevorzugt
ε ≤ γ-60° und bevorzugt
ε≤γ -30° und bevorzugt
ε≤γ -10° und bevorzugt
ε≤γ- 5° und bevorzugt
ε=γ.

Die maschinentechnisch notwendigen Axialspalte sind - gleicherrnaßen wie in Fig. 9 - stark übertrieben in Fig. 10 dargestellt. Die axialen Spalte 65 zwischen den Knetscheiben 32,33 einerseits und den Absperrelementen 46, 48 und 47, 49 haben eine axiale Breite c, die sich im Bereich von einigen Hundertstel bis einigen wenigen Zehntel-Millimeter bewegt und deren Größe auch durch entsprechende Wahl maschinentechnisch optimiert werden kann. Die Auslegung aller Spalte 63, 64, 65 und der Versatzlücken 54, 55 beeinflußt nicht nur wesentlich die Dehn- und Scherströmung in diesen Bereichen, sondern auch den Fluß des Produktes. So kann über die Dimensionierung der Zwickeldreiecksvolumen 44, 45 und der Spalte 63, 64, 65 und der Versatzlücken 54,55 die Produktbeanspruchung, der Produktfluß sowie die spezifische Energieeinleitung gezielt gesteuert werden.

Bei der weiteren Ausführungsform nach Fig. 11 sind die nach Art von Knetscheiben ausgebildeten Absperrelemente 46 bis 49 so angeordnet, daß keine Versatzlücke gebildet wird, es gilt also ε≤γ. In einem oder beiden Absperrelementen 46 bis 49 sind Ausquetschkanäle 66 vorgesehen, und zwar in der Nähe der nacheilenden Kammspitze 67 des jeweiligen Absperrelementes. Solche Ausquetschkanäle 66 können anstelle einer Versatzlükke oder auch zusätzlich zu einer sehr kleinen Versatzlücke vorgesehen sein. Sie können sowohl in dem stromaufwärts als auch in dem stromabwärts angeordneten Absperrelement 46, 47 bzw. 48, 49 ausgebildet werden, wodurch sowohl die Produktbeanspruchung als auch der Produktstrom gezielt gesteuert werden kann.

## Patentansprüche

1. Gleichdralldoppelschneckenextruder
- mit einem Gehäuse (1),
- mit zwei zueinander parallelen, einander teilweise unter Bildung von zwei Zwickeln (40, 41) durchdringenden Gehäuse-Bohrungen (29, 30),
- mit zwei in den Gehäuse-Bohrungen (29, 30) angeordneten gleichsinnig drehantreibbaren Wellen (3, 4),
- mit auf den Wellen (3, 4) angeordneten Schneckenelementen (12, 16, 18, 26),
- mit mindestens einem Knetscheibenpaar (31), das aus je einer auf jeder Welle (3, 4) drehfest angebrachten, eingängigen, mit einem Kamm (34) mit einem Kammwinkel γ aufweisenden Knetscheibe (32, 33) gebildet ist, die miteinander kämmen und bei einer Umdrehung in Drehrichtung (7) ein im Querschnitt zumindest weitgehend geschlossenes Zwickeldreiecksvolumen (44, 45) im Bereich jedes Zwickels (40, 41) begrenzen,
**dadurch gekennzeichnet,**
**daß** beiderseits der ein Knetscheibenpaar (31) bildenden Knetscheiben (32, 33) in stromaufwärtiger und stromabwärtiger Richtung je-ein Absperrelement (46 bis 49, 46' bis 49') drehfest auf den Wellen (3, 4) derart angeordnet ist, daß unter Bildung einer Quetscher-Einheit (57 bis 60, 57' bis 60') das Zwickeldreiecksvolumen (44, 45) in Richtung der Achsen (5,6) in stromaufwärtiger und stromabwärtiger Richtung zumindest in erheblichem Maße geschlossen ist.

2. Gleichdralldoppelschneckenextruder nach Anspruch 1, **dadurch gekennzeichnet,**
**daß** die Absperrelemente (46 bis 49) nach Art von Knetscheiben mit untereinander und zu den Knetscheiben (32, 33) zumindest im wesentlichen gleicher Querschnittsgeometrie ausgebildet sind.

3. Gleichdralldoppelschneckenextruder nach Anspruch 1 oder 2, **dadurch gekennzeichnet,**
**daß** die Absperrelemente (46 bis 49) um einen Versatzwinkel ε gegenüber der jeweiligen Knetscheibe (32, 33) versetzt auf der jeweiligen Welle (3, 4) angeordnet sind.

4. Gleichdralldoppelschneckenextruder nach Anspruch 3, **dadurch gekennzeichnet,**
**daß** bei einer Beziehung ε>γ eine Versatzlücke (54, 55) gebildet ist, die das Zwickeldreiecksvolumen (44, 45) in stromaufwärtiger und/oder stromabwärtiger Richtung teilweise öffnet.

5. Gleichdralldoppelschneckenextruder nach Anspruch 3, **dadurch-gekennzeichnet,**
**daß** für den Versatzwinkel ε in Bezug auf den Kammwinkel γ-gilt: ε≤γ.

6. Gleichdralldoppelschneckenextruder nach einem der Ansprüche 1 bis 5, **dadurch gekennzeichnet,**
**daß** in mindestens einem Absperrelement (46 bis 49) Ausquetschkanäle (66) ausgebildet sind.

7. Gleichdralldoppelschneckenextruder nach Anspruch 1, **dadurch gekennzeichnet,**
**daß** die Absperrelemente (46' bis 49') durch Schneckenelemente (61, 62) gebildet sind.

8. Gleichdralldoppelschneckenextruder nach einem der Ansprüche 1 bis 7, **dadurch gekennzeichnet,**
**daß** zwischen den Absperrelementen (46 bis 49,46' bis 49') und dem Gehäuse (2) definierte radiale Spalte (63), und/oder im Eingriffsbereich der Knetscheiben (32, 33) eines Knetscheibenpaares (31) ein definierter radialer Spalt (64) und/oder zwischen den Knetscheiben (32, 33) eines Knetscheibenpaares (31) und den einander paarweise zugeordneten Absperrelementen (46 bis 49, 46' bis 49') definierte axiale Spalte (65) ausgebildet sind.

9. Gleichdralldoppelschneckenextruder nach einem der Ansprüche 1 bis 8, **dadurch gekennzeichnet,**
**daß** mehrere Quetscher-Einheiten (57 bis 60, 57' bis 60') in Achsrichtung unmittelbar hintereinander jeweils - bezogen auf die Drehrichtung (7) - gegeneinander versetzt angeordnet sind.

## Claims

1. A co-rotating twin-screw extruder comprising
- a housing (1);
- two housing bores (29, 30), which are parallel to each other and intersect partially, forming two approximately triangular areas (40, 41);
- two shafts (3, 4), which are disposed in the housing bores (29, 30) and drivable to rotate in the same direction;
- screws (12, 16, 18, 26) disposed on the shafts (3, 4);
- at least a pair of kneading disks (31), each formed by a single-flight kneading disk (32, 33) which has a crest (34) with a crest angle γ and is fixed on each shaft (3,4), intermeshing and upon rotation in the direction of rotation (7) defining, in the vicinity of each approximately triangular area (40, 41), a volume (44, 45) which is at least substantially blocked in cross-section;
**characterized**
**in that** on either side of the kneading disks (32, 33), which constitute a pair of kneading disks (31), a blocking element (46 to 49, 46' to 49') is disposed in the upstream and the downstream direction non-rotatably on the shafts (3, 4) so that the volume (44, 45) is blocked at least to a substantial extent in the direction of the axes (5, 6) in the upstream and downstream direction, thus forming a squeezer unit (57 to 60, 57' to 60').

2. A co-rotating twin-screw extruder according to claim 1, **characterized in that** the blocking elements (46 to 49) are formed like kneading disks, having a cross-sectional geometry which is at least substantially identical among them and with the kneading disks (32, 33).

3. A co-rotating twin-screw extruder according to claim 1 or 2, **characterized**
**in that** the blocking elements (46 to 49) are disposed on the respective shaft (3, 4), offset by an offset angle ε in relation to the respective kneading disk (32, 33).

4. A co-rotating twin-screw extruder according to claim 3, **characterized**
**in that,** in the case of a relation of ε > γ, an offset gap (54, 55) forms, partially opening the volume (44, 45) in the upstream and/or downstream direction.

5. A co-rotating twin-screw extruder according to claim 3, **characterized**
**in that** ε ≤ γ applies to the offset angle ε in relation to the crest angle γ.

6. A co-rotating twin-screw extruder according to one of claims 1 to 5,
**characterized**
**in that** squeeze-out channels (66) are formed in at least one blocking element (46 to 49).

7. A co-rotating twin-screw extruder according to claim 1, **characterized**
**in that** the blocking elements (46' to 49') are screws (61, 62).

8. A co-rotating twin-screw extruder according to one of claims 1 to 7,
**characterized**
**in that** radial gaps (63) are formed, which are defined between the blocking elements (46 to 49, 46' to 49') and the housing (2). and/or that a defined radial gap (64) is formed in the area of engagement of the kneading disks (32, 33) of a pair of kneading disks (31), and/or that axial gaps (65) are formed, which are defined between the kneading disks (32, 33) of a pair of kneading disks (31) and the blocking elements (46 to 49, 46' to 49') that are allocated to each other by twos.

9. A co-rotating twin-screw extruder according to one of claims 1 to 8,
**characterized**
**in that** several squeezer units (57 to 60, 57' to 60') are disposed directly successively in the axial direction, offset one from the other related to the direction rotation (7).

## Revendications

1. Extrudcuse à deux vis à rotation identique,
- avec un carter (1),
- avec deux alésages de boîtier (29, 30) parallèles l'un à l'autre, s'interpénétrant partiellement en formant deux goussets (40, 41),
- avec deux arbres (3, 4) entraînés en rotation dans le même sens, disposés dans les alésages de boîtier (29, 30),
- avec des éléments de vis (12, 16, 18, 26) disposés sur les arbres (3, 4),
- avec au moins une paire de disques de pétrissage (31) dont chacune est formée d'un disque de pétrissage à filet unique (32, 33) solidarisé en rotation sur chaque arbre (3, 4) et pourvu d'un peigne (34) avec un angle de peigne γ, lesdits disques de pétrissage s'engrenant l'un avec l'autre et, lora d'un tour dans la direction de rotation (7), délimitant un volume triangulaire en gousset (44, 45) à section transversale au moins en grande partie fermée dans la zone de chaque gousset (40, 41),
**caractérisée en ce que**,
de part et d'autre des disques de pétrissage (32, 33) formant une paire de disques de pétrissage (31), un élément de fermeture (46 à 49, 46' à 49') est solidarisé en rotation sur les arbres (3, 4) dans chacune des directions amont et aval, de façon que, parallèlement à la formation d'une unité d'écrasement (57 à 60, 57' à 60'), le volume triangulaire en gousset (44, 45) soit au moins en majeure partie fermé dans la direction des axes (5, 6) dans les directions amont et aval.

2. Extrudeuse à deux vis à rotation identique selon la revendication 1, **caractérisée en ce que**
les éléments de fermeture (46 à 49) sont conçus sous la forme de disques de pétrissage avec des géométries en coupe transversale au moins sensiblement identiques l'une à l'autre et à celle des disques de pétrissage (32, 33).

3. Extrudeuse à deux vis à rotation identique selon la revendication 1 ou 2, **caractérisée en ce que**
les éléments de fermeture (46 à 49) sont décalés selon un angle de décalage ε par rapport au disque de pétrissage respectif (32, 33) sur l'arbre respectif (3, 4).

4. Extrudeuse à deux vis à rotation identique selon la revendication 3, **caractérisée en ce que**,
en présence de la relation ε > γ, est formé un intervalle de déport (54, 55) qui ouvre partiellement le volume triangulaire en gousset (44, 45) dans les directions amont et/ou aval.

5. Extrudeuse à deux vis à rotation identique selon la revendication 3, **caractérisée en ce que**,
pour l'angle de décalage ε par rapport à l'angle de peigne γ, on a ; ε ≤ γ.

6. Extrudeuse à deux vis à rotation identique selon une des revendications 1 à 5, **caractérisée en ce que**
des canaux de pressage (66) sont ménagés dans au moins un élément de fermeture (46 à 49).

7. Extrudeuse à deux vis à rotation identique selon la revendication 1, **caractérisée en ce que** les éléments de fermeture (46' à 49') sont formés par des éléments de vis (61, 62).

8. Extrudeuse à deux vis à rotation identique selon une des revendications 1 à 7, **caractérisée en ce que**,
entre les éléments de fermeture (46 à 49, 46' à 49') et le carter (2) est ménagé un interstice radial défini (63) et/ou dans la zone d'engrénement des disques de pétrissage (32, 33) d'une paire de disques de pétrissage (31) est ménagé un interstice radial défini (64) et/ou entre les disques de pétrissage (32, 33) d'une paire de disques de pétrissage (31) et les éléments de fermeture associés mutuellement par paires (46 à 49, 46' à 49') est ménagé un interstice axial défini (65).

9. Extrudeuse à deux vis à rotation identique selon une des revendications 1 à 8, **caractérisée en ce que**
plusieurs unités d'écrasement (57 à 60, 57' à 60') sont disposées directement les unes derrière les autres dans la direction axiale - avec des décalages mutuels par rapport à la direction de rotation (7).
